# EUROPÄISCHE PATENTSCHRIFT

(11) **EP 1 501 886 B1**
(45) Veröffentlichungstag und Bekanntmachung des Hinweises auf die Patenterteilung: **24.07.2013**
(21) Anmeldenummer: 03717245.9
(22) Anmeldetag: 28.03.2003
(51) Int. Cl.: C08J 5/18, B29C 49/24, G09F 3/02

(54) **VERWENDUNG VON POLYPROPYLENFOLIEN ZUR IN-MOLD ETIKETTIERUNG**
USE OF POLYPROPYLENE FILMS FOR IN-MOLD LABELING
UTILISATION DE FILMS POLYPROPYLENE POUR L'ETIQUETAGE AU MOULAGE

(30) Priorität: 24.04.2002 DE 10218246
(43) Veröffentlichungstag der Anmeldung: 02.02.2005
(73) Patentinhaber: Treofan Germany GmbH & Co.KG, 66539 Neunkirchen (DE)
(72) Erfinder: BUSCH, Detlef, 66740 Saarlouis (DE); KOCHEM, Karlheinz, 66539 Neunkirchen (DE); SCHMITZ, Bertram, 57200 Sarreguemines (FR); TEWS, Wilfrid, 66894 Bechhofen (DE)
(74) Vertreter: Kremer, Viola
(86) Internationale Anmeldenummer: PCT/EP2003/003233
(87) Internationale Veröffentlichungsnummer: WO 2003/091316

(56) Entgegenhaltungen:
- EP-A- 0 865 909
- WO-A-99/55518
- US-A- 5 231 126
- Schultz, R.B. (2000) 'The IML process: why in-mold labeling' in International In-Mold Labeling Conference, pages 7-9.
- Rosato D.V. (1993) 'Rosato's Plastics Encyclopedia and Dictionary', page 501, Hanser Publishers
- Varga, J. and Ehrenstein G.W. (1999) 'Beta-modification of isotactic polypropylene', pages 51-59, in Karger-Kocsis, J. 'Polypropylene, an A-Z reference'
- SHERMAN, L.M.: 'New clarifiers and Nucleators: they make polypropylene run clearer and faster', [Online] Plastics Technology Gefunden im Internet: <URL:http://www.ptonline.com/articles/20020 7fa1.htp> [gefunden am 2010-07-04]

## Beschreibung

Die vorliegende Erfindung betrifft die Verwendung einer biaxial orientierten Polypropylenfolie als In-Mould-Etikett beim Blasformen.

Etikettenfolien umfassen ein umfangreiches und technisch komplexes Gebiet. Man unterscheidet verschiedene Etikettiertechniken, welche hinsichtlich der Prozeßbedingungen grundverschieden sind und zwangsläufig an die Etikettenmaterialien unterschiedliche technische Anforderungen stellen. Allen Etikettierprozeßen ist gemeinsam, daß als Endergebnis optisch ansprechend etikettierte Behältnisse resultieren müssen, bei denen eine gute Haftung auf dem etikettierten Behältnis gewährleistet sein muß.

Bei den Etikettierverfahren werden sehr verschiedene Techniken zum Applizieren des Etikett angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist in allen diesen verschiedene Etikettierverfahren möglich.

Auch beim In-Mould Etikettieren wird zwischen verschiedenen Techniken unterschieden, bei denen verschiedene Verfahrensbedingungen angewendet werden. Allen In-Mould Etikettierverfahren ist gemeinsam, daß das Etikett am eigentlichen Formgebungsverfahren des Behälters teilnimmt und währenddessen appliziert wird. Hierbei kommen jedoch sehr verschiedene Formgebungsverfahren zum Einsatz, wie beispielsweise Spritzgußverfahren, Blasformverfahren, Tiefziehverfahren.

Beim Spritzgußverfahren wird ein Etikett in die Spritzgußform eingelegt und von einem schmelzeflüssigen Kunststoff hinterspritzt. Durch die hohen Temperaturen und Drücke verbindet sich das Etikett mit dem Spritzgußteil und wird zum integralen, nicht ablösbaren Bestandteil des Spritzlings. Nach diesem Verfahren werden beispielsweise Becher und Deckel von Eiscreme- oder Margarinebechem hergestellt.

Hierbei werden einzelne Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab.Im Ergebnis muß das Etikett faltenfrei und optisch einwandfrei auf dem Behälter haften.

Beim Spritzen liegt der Einspritzdruck in einem Bereich von 300 bis 600 bar. Die zum Einsatz kommenden Kunststoffe haben einen Schmelzflußindex von um die 40 g/10min. Die Einspritztemperaturen hängen von dem eingesetzten Kunststoff ab. In manchen Fällen wird die Form zusätzlich gekühlt und ein Verkleben des Spritzlings mit der Form zu vermeiden.

Beim Tiefziehen werden unorientierte dicke Kunststoffplatten, meist gegossenes PP oder PS, in einer Dicke von ca. 200µm erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann. Die gute Haftung muß auch bei diesen niedrigen Verarbeitungstemperaturen gewährleistet sein. Die Verarbeitungsgeschwindigkeiten dieses Verfahrens sind niedriger als beim Spritzguß.

Auch beim Blasformen von Behältern oder Hohlkörpern ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdorn eingeführt durch den die Öffnung des Formlings ausgebildet wird. Über den Blasdorn wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Bei diesen Blasformverfahren beträgt der Druck beim Aufblasen des Schmelzeschlauchs ca. 4-15 bar und die Temperaturen sind wesentlich niedriger als beim Spritzgießen. Die Kunststoffmaterialien haben einen niedrigeren MFI als beim Spitzgießen, um einen formstabilen Schmelzeschlauch zu bilden und verhalten sich daher beim Abkühlungsprozeß anders als die niederviskosen Materialien für das Spritzgießen.

Auch in diesen Blasformverfahren werden vermehrt biaxial orientierte Folien aus thermoplastischen Kunststoffen zur Etikettierung von Behältnissen beim Formen eingesetzt. Die Folien müssen hierzu ein ausgewähltes Eigenschaftsprofil aufweisen, um zu gewährleisten, daß sich die Etikettenfolie und der geblasene Formkörper glatt und blasenfrei aneinander schmiegen und sich miteinander verbinden. Hierfür wurden im Stand der Technik verschiedene Lösungen vorgeschlagen.

Es ist beispielsweise im Stand der Technik bekannt, daß beim In-Mould-Blasformen Lufteinschlüsse, die als große Blasen die Optik und die Haftung beeinträchtigen durch eine besondere Oberflächenrauheit der Folie vermindert werden können.

Hierzu muß die Folie auf der dem Behälter zugewandten Seite eine Rauheit im µm-Bereich aufweisen, die ein Verdrängen der Luft beim Etikettieren ermöglicht. Derartige Rauheiten werden beispielsweise durch eine spezielle Rezeptur der Deckschicht von mehrschichtigen Folien oder durch Strukturierung der Oberfläche erzeugt.

So wird in der US 5,254,302 eine BOPP-Folie beschrieben, deren Rückseite durch Einprägen einer definierten Oberflächenstruktur modifiziert ist. Nach der Prägung wird die Folie auf dieser Seite mit einem Hot-Melt Klebstoffsystem derart beschichtet, daß die Oberflächenstruktur erhalten bleibt. Das Klebstoffsystem gewährleistet die Haftung der Etikettenfolie auf dem Formkörper und die strukturierte Oberfläche verhindert die Bildung von Blasen.

US Patent 4,986,866 beschreibt eine mehrschichtige papierähnliche Etiketten-Folie mit einer siegelfähigen Deckschicht, die vor dem Streckprozeß mechanisch mittels Walzen geprägt wird. Auch hier soll diese Oberflächenstruktur das Entlüften sicherstellen und blasenfreie Haftung des Etiketts ermöglichen.

DE 199 49 898 beschreibt die Verwendung einer Polypropylenfolie mit einer mittleren Rauhigkeit von mindesten 3,5 µm für die Etikettierung beim Blasformverfahren. Diese Rauhigkeit wird durch eine Polypropylenmischung in der Deckschicht erzeugt, wobei diese Mischung aus Polypropylen und unverträglichen oder teilverträglichen thermoplastischen Polymeren besteht.

Neben diesen Blasen tritt als weiterer unabhängiger unerwünschter Effekt beim Blasform-Etikettieren die Bildung einer sogenannten Orangenhaut auf. Dieser Effekt hat nichts mit den großen Blasen zu tun die durch mangelnde Entlüftung entstehen. Orangenhaut erscheint nicht in Form vereinzelter mehr oder minder großer Blasen, sondern vielmehr ist die gesamte Etikettenoberfläche mit einer gewissen Regemäßigkeit uneben, so daß das Erscheinungsbild der Oberflächenstruktur einer Orange sehr stark ähnelt, daher häufig als Orangenhaut bezeichnet wird. Manchmal wird diese Störung auch als Lederhaut oder "leathery effect" bezeichnet. Verschiedene Lösungen wurden zur Verminderung des Orangenhauteffektes vorgeschlagen Eine Entwicklungsrichtung basiert auf der Vermutung, daß die Orangenhaut durch Schrumpfung des blasgeformten Behälters beim Abkühlen entsteht. Andererseits schrumpfen beim Abkühlen auch die Spritzlinge des In-Mould-Spritzguß sehr stark, dennoch ist dieses Verfahren sehr viel weniger anfällig für störende Orangenhauteffekte.

EP 0 559 484 beschreibt eine Folie für die In-Mould Etikettierung, wobei nicht zwischen Spritzguß In-Mould und Blasform In-Mould unterschieden wird. Die Folie weißt eine Deckschicht aus Polyethylen und Füllstoffen auf, welche auf einer vakuolenhaltigen Basisschicht aufgebracht ist. Die Polyethylenschicht ist dem Behälter zugewandt und auf der gegenüberliegenden Außenseite können weitere Schichten aufgebracht werden. Nach dieser Lehre kann das Auftreten eines Lederhauteffektes durch weitere pigmentierte Außenschichten kaschiert werden.

EP 0 546 741 beschreibt eine Folie mit einer vakuolenhaltigen Deckschicht, die auf einer nicht vakuolenhaltigen Basisschicht aufgebracht ist. Die vakuolenhaltige Deckschicht ist beim In-Mould-Prozeß dem Behälter zugewandt. Nach dieser Lehre entsteht die Orangenhaut durch Schrumpfung der vakuolenhaltigen Etikettenfolie beim Spritzgießen und kann vermieden werden, in dem man eine zu starke Vakuolenbildung vermeidet und den Füllstoffgehalt der Folie reduziert.

Demgegenüber lehrt WO00/12288, daß durch ein kontrolliertes Mitschrumpfen des Etiketts weniger Orangenhaut auftritt und schlägt die Verbesserung des Orangenhaut-Effektes beim Blasformen durch bestimmte Schrumpfeigenschaften der Folie vor. Danach soll die In-Mould-Etikettenfolie einen Schrumpf von mindestens 4% in beide Richtungen bei 130°C und 10min aufweisen. Durch diesen Schrumpf entsteht beim Blasform-Etikettieren weniger Orangenhaut. Diese Lehre bestätigt jedoch gleichzeitig, daß eine zu niedrige Dichte wiederum zu vermehrter Orangenhautbildung führt. Es wird daher zusätzlich empfohlen, die Dichte der Folie in einem Bereich von 0,65 bis 0,85 g/cm³ zu halten.

In der Praxis zeigt sich, daß alle Blasformverfahren wesentlich anfälliger für Orangenhauteffekte beim Etikettieren sind, als die Verfahren der In-Mould Etikettierung beim Spitzgießen.

Alle bekannten Lehren lösen das Problem der Bildung von Orangehaut bei der Verwendung von biaxial orientierten Folien beim In-Mould Blasformen nicht befriedigend oder sie weisen andere gravierende Nachteile auf. Die vorgeschlagenen Maßnahmen zeigen zwar teilweise bei Spritzgußanwendungen zuverlässige Ergebnisse, aber beim Blasformverfahren ist das Erscheinungsbild des Etiketts auf dem Behälter nach wie vor mangelhaft und durch Orangenhaut stark beeinträchtigt.

EP 0 865 909 beschreibt die Verwendung von "microvoided" Folien für Etiketten. Die Folie enthält ein ß-Nukleiierungsmittel, durch welches beim Abkühlen des Schmelzefilms ein erhöhter Anteil an ß-kristallinem Polypropylen in der Vorfolie erzeugt wird. Beim Verstrecken der Vorfolie werden "microvoids" erzeugt. Es ist beschrieben, daß die Folie eine gute Bedruckbarkeit aufweist.

EP 0 865 909 A beschreibt Polymerfolien mit einer Schicht aus Propylenpolymerharz, die Hohlräume umfasst. Dabei werden die Hohlräume durch Verstrecken einer Folie erhalten, die die β-Form von Polypropylen enthält. Die auf diese Weise erhältlichen Polymerfolien zeigen eine niedrige statische Aufladung beim Abwickeln von Rollen in Etikettieranwendungen und auch beim Entstapeln von vorgefertigten Etiketten.

WO 99/55518 A1 betrifft eine poröse, opake Folie, die auf hoch-kristallinem Polypropylen basiert, welches einen hohen Modul und einen geringen Schrumpf sowie eine geringe Warmverformung aufweist. Biaxial-orientierte, einschichtige Folien mit einer Dicke von 1,75*0,0254 mm bis 4*0,0254 mm können ohne Haarrissbildung oder anderen Gebrauchsdefiziten verwendet werden, die bei der Verwendung von konventionellen Inmold Etiketten zu beobachten sind.

US 5 231 126 beschäftigt sich mit der Gewinnung von β-kristallinem, isotaktischen Polypropylen in hoher Reinheit und mit hoher thermischer Stabilität durch Schmelzkristallisation in Gegenwart eines Zweikomponenten-Nukleierungsmittels. Das Zweikomponenten-Nukleierungsmittel wird durch Mischen von 0,0001-1 Gew.-% einer zweibasischen Säure mit 0,001-1 Gew.-% eines Oxids, Hydroxids oder eines Säuresalzes eines Metalls der Gruppe IIA gebildet. Das β-kristalline, isotaktischen Polypropylen kann für die Herstellung von Extrusionsformen mit hoher Schlagzähigkeit, von porösen Folien und von porösen Hohlfasern verwendet werden.

Die Aufgabe der vorliegenden Erfindung bestand darin, eine Etikettenfolie zur Verfügung zu stellen, welche keine Orangenhaut bei der In-Mould-Etikettierung im Blasform-Verfahren aufweisen soll.

Die der Erfindung zugrundeliegende Aufgabe wird gelöst durch die Verwendung einer biaxial orientierten mikroporösen Folie, die Polypropylen und ß-Nukleierungsmittel enthält und deren Mikroporosität durch Umwandlung von ß-kristallinem Polypropylen beim Verstrecken der Folie erzeugt wird, zur Etikettierung von Behältnissen beim Blasformen, wobei die Folie eine Dichte von < 0,5g/cm³ hat.

Es wurde gefunden, daß sich eine Folie mit einer mikroporösen Schicht hervorragend beim Blasformen-Etikettieren verwenden läßt und bei den verschiedensten Verfahrensbedingungen keinerlei Orangenhaut auftritt, wenn diese Mikroporosität indirekt durch ß-Nukleierungsmittel erzeugt wird. Diese so erzeugten Strukturen unterscheiden sich signifikant von denen herkömmlicher vakuolenhaltiger Folien.

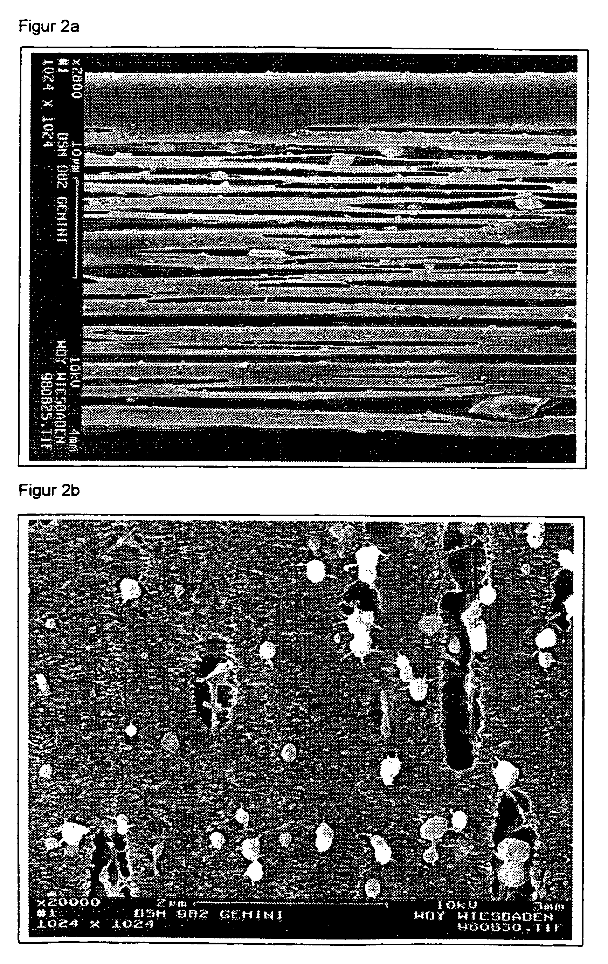

Die Figuren 2a und 2b zeigen die typische Struktur einer vakuolenhaltigen Schicht im Querschnitt (2a) und in einer Draufsicht (2b). Durch die Unverträglichkeit der vakuoleninitierenden Teilchen kommt es beim Verstrecken zu Abrißen zwischen der Oberfläche des Teilchens und der Polymermatrix und es entsteht ein geschlossener luftgefüllter Hohlraum, der als Vakuole bezeichnet wird. Diese Vakuolen sind über die gesamte Schicht verteilt und reduzieren die Dichte der Folien, bzw. der Schicht. Diese Folien zeigen jedoch noch immer eine gute Barriere, beispielsweise gegenüber Wasserdampf auf, da die Vakuolen geschlossen sind und die Struktur insgesamt nicht durchlässig ist.

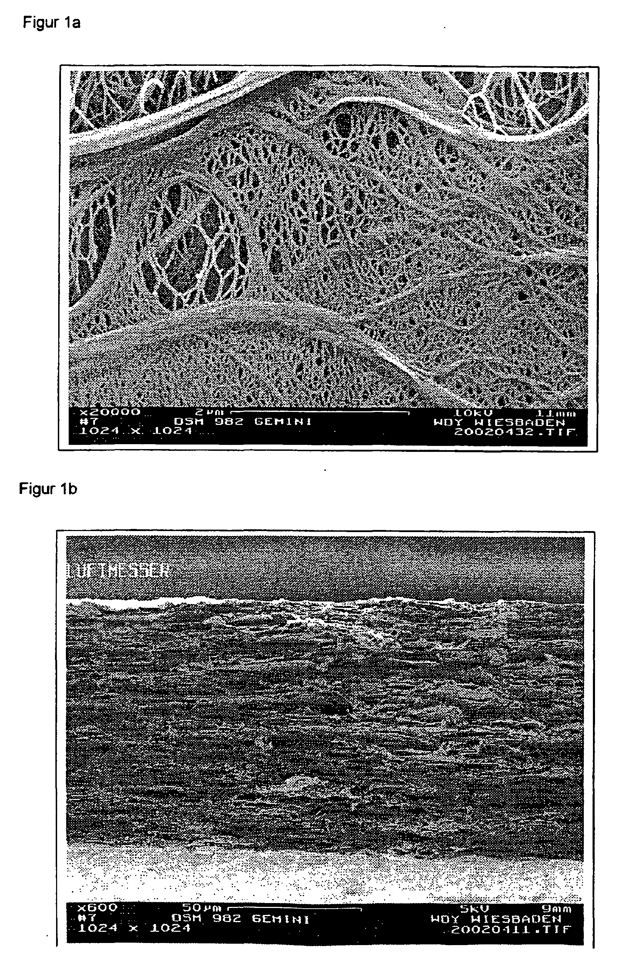

Im Unterschied hierzu ist die poröse Schicht gasdurchlässig und zeigt wie aus den Figuren 1a (Draufsicht) und 1b (Querschnitt), ersichtliche eine offenporige Netzstruktur. Diese Struktur entsteht nicht durch unverträgliche Füllstoffe, sondern nach einem technisch ganz verschiedenen Verfahren. Die mikroporöse Schicht enthält Poylpropylen und ß-Nukleierungsmittel. Diese Mischung aus Polypropylen mit ß-Nukleierungsmittel wird zunächst wie üblich bei der Folienherstellung in einem Extruder aufgeschmolzen und durch eine Breitschlitzdüse als Schmelzefilm auf eine Abkühlwalze extrudiert. Das ß-Nukleierungsmittel fördert die Kristallisation von ß-kristallinem Polypropylen beim Abkühlen des Schmelzefilms, so daß eine unverstreckte Vorfolie mit einem hohen Gehalt an ß-kristallinem Polypropylen entsteht. Beim Verstrecken dieser Vorfolie können die Temperatur und Streckbedingungen so gewählt werden, daß sich die ß-Kristallite in die thermisch stabilere alpha Phase des Polypropylens umwandeln. Da die Dichte der ß-Kristallite niedriger ist geht diese Umwandlung mit einer Volumenschrumpfung einher und führt dadurch zu der charakteristischen porösen Struktur, ähnlich einem aufgerissenem Netzwerk.

Beide Verfahren sind an sich im Stand der Technik bekannt. Überraschenderweise wurde gefunden, daß eine Folie mit poröser Schicht keine Orangenhaut aufweist, wenn sie beim Blasformverfahren als Etikettenfolie eingesetzt wird. Opake Folien mit einer vakuolenhaltigen Schicht ergeben beim Blasformverfahren die unerwünschte Orangenhaut.

Die Zusammensetzung der mikroporösen Schicht, nachstehend auch Schicht genannt, wird nunmehr im einzeln näher beschrieben. Die mikroporöse Schicht enthält Propylen-Homopolymer und/oder ein Propylenblockcopolymer, gegebenenfalls zusätzlich andere Polyolefine, und mindestens ein ß-Nukleierungsmittel, sowie gegebenenfalls zusätzlich übliche Additive, beispielsweise Stabilisatoren, Neutralisationsmittel, Gleitmittel, Antistatika, Pigmente in jeweils wirksamen Mengen. Im allgemeinen wird auf zusätzliche unverträgliche vakuolenintierende Füllstoffe wie Calciumcarbonat oder Polyester, wie PET oder PBT, verzichtet, so daß die Schicht weniger als 5 Gew.-%, vorzugsweise 0 bis höchstens 1 Gew.% dieser vakuoleninitierenden Füllstoffe enthält. Derartige geringe Mengen können beispielsweise über die Einarbeitung von Folienregenerat in die Schicht gelangen.

Im allgemeinen enthält die Schicht mindestens 70 Gew.-%, vorzugsweise 80 bis 99,95 Gew.-%, insbesondere 90 bis 97 Gew.%, eines Propylenhomopolymeren und/oder Propylenblockcopolymeren und 0,001 bis 5 Gew.-%, vorzugsweise 0,1 bis 3 Gew.% mindestens eines ß-Nukleierungsmittels, jeweils bezogen auf das Gewicht der Schicht.

Geeignete Propylenhomopolymeren enthalten 80 bis 100 Gew.-%, vorzugsweise 90 bis 100 Gew.% Propyleneinheiten und besitzen einen Schmelzpunkt von 140°C oder höher, vorzugsweise 150 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem ataktischen Anteil von 15 Gew.-% und weniger, stellen bevorzugte Propylenpolymere für die Schicht dar, wobei isotaktisches Propylenhomopolymer besonders bevorzugt ist.

Geeignete Propylenblockcopolymere enthalten überwiegend, d.h. mehr als 50 Gew.-%, vorzugsweise 70 bis 99 Gew.-%, insbesondere 90 bis 99 Gew.-% Propyleneinheiten. Geeignete Comonomere in entsprechenden Menge sind Ethylen, Butylen oder höhere Alkenhomologe, worunter Ethylen bevorzugt ist. Der Schmelzflußindex der Blockcopolymeren liegt in einem Bereich von 1 bis 15 g/10min, vorzugsweise 2 bis 10g/10Min. Der Schmelzpunkt liegt über 140°C, vorzugsweise in einem Bereich von 150 bis 165 °C.

Die angegebenen Gewichtsprozente beziehen sich auf das jeweilige Polymere.

Mischungen aus Propylenhomopolymer und Propylenblockcopolymer enthalten diese beide Komponenten in beliebigen Mischungsverhältnissen. Vorzugsweise liegt das Verhältnis von Propylenhomopolymer zu Propylenblockcopolymer in einem Bereich von 10 zu 90 bis 90 zu 10, vorzugsweise, 20 zu 70 bis 70 zu 20. Derartige Mischungen aus Homopolymer und Blockcopolymer sind besonders bevorzugt und verbessern die Optik der mikroporösen Schicht.

Gegebenenfalls kann die poröse Schicht zusätzlich zu dem Propylenhomopolymeren und/oder Propylenblockcopolymeren anderer Polyolefine enthalten. Der Anteil dieser anderen Polyolefine liegt im allgemeinen unter 30 Gew.-%, vorzugsweise in einem Bereich von 1 bis 20 Gew.%. Andere Polyolefine sind beispielsweise statistische Copolymere von Ethylen und Propylen mit einem Ethylengehalt von 20 Gew.-% oder weniger, statistische Copolymere von Propylen mit C₄-C₈-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder Polyethylene, wie HDPE, LDPE, VLDPE, MDPE und LLDPE.

Als ß-Nukleierungsmittel für die mikroporöse Schicht sind grundsätzlich alle bekannten Zusatzstoffe geeignet, welche die Bildung von ß-Kristallen beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt bei ca. 158 - 162 °C liegt. Durch eine bestimmte Temperaturführung kann beim Abkühlen ein geringer Anteil an ß-kristalliner Phase erzeugt werden, welche gegenüber der monoklinen α-Modifikation mit 148-150°C einen deutlich niedrigeren Schmelzpunkt aufweist. Im Stand der Technik sind Additive bekannt, die zu einem erhöhten Anteil der ß-Modifikation beim Auskristallisieren des Polypropylens führen, beispielsweise γ-Quinacridone, Dihydroquinacridine oder Calciumsalze der Phtalsäure.

Für die Zwecke der vorliegenden Erfindung werden in der porösen Schicht vorzugsweise hochaktive ß-Nukleierungsmittel eingesetzt, welche beim Abkühlen des Schmelzefilms einen ß-Anteil von 30-90%, vorzugsweise von 50-80% erzeugen. Hierfür ist beispielsweise ein zweikomponentiges Nukleierungssystem aus Calciumcarbonat und organischen Dicarbonsäuren geeignet, welches in der DE 3610644 beschrieben ist, auf welche hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide insbesondere N,N-Dicyclohexyl-2,6-Naphtalen dicarboxamide sind geeignete ß-Nukleierungsmittel.

Zusätzlich zu den Nukleierungsmitteln ist die Einhaltung eines bestimmten Temperaturbereiches und Verweilzeiten bei diesen Temperaturen für die Erzielung eines hohen Anteils an ß-kristallinem Polypropylen wichtig. Die Abkühlung des Schmelzefilms erfolgt vorzugsweise bei einer Temperatur von 60 bis 130°C, insbesondere 80 bis 120°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min.

Besonders bevorzugte Ausführungsformen enthalten 0,001 bis 5 Gew.-%, vorzugsweise 0,05 bis 0,5 Gew.-%, insbesondere 0,1 bis 0.3 Gew.% CalciumPimelat oder Calcium-Suberat in der mikroporösen Schicht aus Propylenhomopolymer.

Im allgemeinen ist die mikroporöse Etikettenfolie einschichtig und besteht nur aus der mikroporösen Schicht. Es versteht sich jedoch von selbst, daß diese einschichtige Folie gegebenenfalls mit einer Bedruckung oder einer Beschichtung versehen werden kann, bevor sie als Etikettenfolie beim Blasformen eingesetzt wird. Für solche einschichtigen Ausführungsformen liegt die Dicke der Folie, d.h. der porösen Schicht in einem Bereich von 20 bis 100µm, vorzugsweise 30 bis 80µm.

Gegebenfalls kann die mikroporöse Schicht auf der Außenseite mit einer Corona, Flamm- oder Plasmabehandlung versehen werden, um die Haftung gegenüber Druckfarben oder Beschichtungen zu verbessern.

Die Dichte der mikroporösen Schicht ist weniger als 0,5 g/cm³. Überraschenderweise wurde gefunden, daß eine besonders niedrige Dichte nicht wie bei vakuolenhaltigen, opaken Folien zu einer Verstärkung des Orangenhauteffektes führt. Bezüglich vakuolenhaltiger, opaker Folien lehren einschlägige Schriften, daß eine zu niedrige Dichte durch zu starkes voiding zu einem verstärkten Orangenhauteffekt führt. Überraschenderweise ist dies bei porösen Folien nicht der Fall. Die Dichte kann auf extrem niedrige Werte gesenkt werden und die Folie läßt sich dennoch beim Blasformen einwandfrei applizieren, ohne daß eine störende Orangenhaut auftritt.

In einer weiteren Ausführungsform kann die mikroporöse Schicht mit einer weiteren, Deckschicht versehen werden, wobei die mikroporöse Schicht bei der erfindungsgemäßen Verwendung dieser mehrschichtigen Ausführungsform dem Behältnis zugewandt wird und sich beim Blasformen mit dem Formkörper verbindet. Entsprechend bildet die zusätzlichen Deckschicht die Außenseite. Die zusätzliche Deckschicht kann beispielsweise durch Laminierung oder Kaschierung der porösen Schicht mit einer weiteren Folie aufgebracht werden. Vorzugsweise handelt es sich um eine coextrudierte Deckschicht.

Die gegebenenfalls coextrudierte Deckschicht enthält im allgemeinen mindestens 70 Gew.%, vorzugsweise 75 bis <100 Gew.%, insbesondere 90 bis 98 Gew.-%, eines Polyolefins, vorzugsweise eines Propylenpolymeren und gegebenenfalls weitere übliche Additive wie Neutralisationsmittel, Stabilisator, Antistatika, Gleitmittel, z.B. Fettsäureamide oder Siloxane oder Antiblockmittel in jeweils wirksamen Mengen.

Das Propylenpolymere der Deckschicht ist beispielsweise ein Propylenhomopolymer, wie vorstehend für die poröse Schicht bereits beschrieben oder ein Copolymer aus Propylen und Ethylen oder Propylen und Butylen oder Propylen und einem anderen Olefin mit 5 bis 10 Kohlenstoffatomen. Für die Zwecke der Erfindung sind für die Deckschicht auch Terpolymere von Ethylen und Propylen und Butylen oder Ethylen und Propylen und einem anderen Olefin mit 5 bis 10 Kohlenstoffatomen geeignet. Weiterhin können Mischungen oder Blends aus zwei oder mehreren der genannten Co- und Terpolymeren eingesetzt werden.

Für die Deckschicht sind statistische Ethylen-Propylen-Copolymere und Ethylen-Propylen-Butylen-Terpolymere bevorzugt, insbesondere statistische Ethylen-Propylen-Copolymere mit einem Ethylengehalt von 2 bis 10 Gew.%, bevorzugt 5 bis 8 Gew.%, oder statistische Ethylen-Propylen-Butylen-1-Terpolymere mit einem Ethylengehalt von 1 bis 10 Gew.%, bevorzugt 2 bis 6 Gew.-%, und einem Butylen-1-Gehalt von 3 bis 20 Gew.-%, bevorzugt 8 bis 10 Gew.%, jeweils bezogen auf das Gewicht des Co- oder Terpolymeren.

Die vorstehend beschriebenen statistischen Co- und Terpolymeren weisen im allgemeinen einen Schmelzflußindex von 1,5 bis 30 g/10 min, vorzugsweise von 3 bis 15g/10 min, auf. Der Schmelzpunkt liegt im Bereich von 105°C bis 140°C. Das vorstehend beschriebene Blend aus Co- rund Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 2,16kg (DIN 53735) gemessen.

Die Dicke dieser Deckschicht liegt im allgemeinen in einem Bereich von 1 bis 5µm. Gegebenenfalls kann die Oberfläche dieser Deckschicht zur Verbesserung der Bedruckbarkeit mit einer Corona-, Flamm oder Plasmabehandlung versehen werden. Die Dichte der Folie wird durch die nicht poröse Deckschicht, die auch keine Vakuolen enthält, gegenüber einschichtigen Ausführungsformen nur unwesentlich erhöht und liegt daher auch für diese Ausführungsformen im allgemeinen in einem Bereich von 0,25 bis 0,8 g/cm3, vorzugsweise 0,25 bis 0,6g/cm3, insbesondere < 0,5 g/cm3.

Gegebenenfalls kann die Deckschicht zusätzlich übliche Additive wie Stabilisatoren, Neutralisationsmittel, Antiblockmittel, Gleitmittel, Antistatika etc. in jeweils üblichen Mengen enthalten.

Die poröse Folie für die erfindungsgemäße Verwendung wird vorzugsweise nach dem an sich bekannten Extrusionsverfahren oder Coextrusionsverfahren hergestellt.

Im Rahmen dieses Verfahrens wird so vorgegangen, daß das Polypropylen, welches mit ß-Nukleierungsmittel vermischt ist, in einem Extruder aufgeschmolzen und durch eine Flachdüse auf eine Abzugswalze extrudiert wird, auf der sich die Schmelze unter Ausbildung der ß-Kristallite verfestigt. Im Falle der zweischichtigen Ausführungsform erfolgt die entsprechende Coextrusion zusammen mit der Deckschicht. Die Abkühltemperaturen und Abkühlzeiten werden so gewählt, daß ein möglichst hoher Anteil an ß-kristallinem Polypropylen in der Vorfolie entsteht. Diese Vorfolie mit einem hohen Anteil an ß-kristallinem Polypropylen wird anschließend derart biaxial gestreckt, daß es bei der Verstreckung zu einer Umwandlung der ß-Kristallite in alpha Polypropylen kommt. Die biaxial gestreckte Folie wird abschließend thermofixiert und gegebenenfalls auf einer Oberfläche corona-, plasma- oder flammbehandelt.

Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Die Abzugswalze oder die Abzugswalzen werden bei einer Temperatur von 60 bis 130°C, vorzugsweise 80 bis 120°C gehalten, um die Ausbildung eines hohen Anteils an ß-kristallinem Polypropylen zu fördern.

Bei der Verstreckung in Längsrichtung beträgt die Temperatur weniger als 140°C, vorzugsweise 90 bis 125 °C. Das Streckverhältnis liegt in einem Bereich 3:1 bis 5:1 Die Verstreckung in Querrichtung erfolgt bei einer Temperatur von größer 140°C, vorzugsweise bei 145 bis 160°C. Das Querstreckverhältnis liegt in einem Bereich von 3:1 bis 6:1 gestreckt.

Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich im allgemeinen ihre Thermofixierung (Wärmebehandlung) an, wobei die Folie etwa 0,5 bis 10 s lang bei einer Temperatur von 110 bis 150°C gehalten wird. Anschließend wird die Folie in üblicher Weise mit einer Aufwickeleinrichtung aufgewickelt.

Vorzugsweise wird, wie oben erwähnt, nach der biaxialen Streckung üblicherweise eine Oberfläche der Folie nach einer der bekannten Methoden corona-, plasma- oder flammbehandelt.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Nach diesem Verfahren erhält man eine poröse Folie mit einem opaken Aussehen. Die poröse Schicht hat eine netzähnliche Struktur (siehe Figuren 1a und 1b), die gegenüber Gasen durchlässig ist. Im allgemeinen weisen diese Folien einen Gurely-Wert im Bereich von > 50 Sek. und eine Porosität im Bereich von 5 bis 80 % auf.

Erfindungsgemäß wird die poröse Folie beim Blasformverfahren eingesetzt. Einzelheiten des Blasformverfahrens sind vorstehend im Zusammenhang mit dem Stand der Technik bereits beschrieben. Vorzugsweise verwendet man die poröse Folie zu Etikettierung von Polyethylenbehältern beim Blasformen. Geeignete Blasformverfahren sind beispielsweise auch in ISDN 3-446-15071-4 beschrieben, auf welches hiermit ausdrücklich Bezug genommen wird.

Zur Charakterisierung der Rohstoffe und der Folien wurden die folgenden Meßmethoden benutzt:
Schmelzflußindex
   Der Schmelzflußindex der Propylenpolymeren wurde nach DIN 53 735 bei 2,16 kg Belastung und 230 °C gemessen und bei 190°C und 2,16 kg für Polyethylene.
Schmelzpunkte
   DSC-Messung, Maxima der Schmelzkurve, Aufheizgeschwindigkeit 20 K/min.
Dichte
   Die Dichte wird nach DIN 53 479, Verfahren A, bestimmt.

Die Erfindung wird nunmehr durch die nachfolgenden Beispiele erläutert.

### Beispiel 1

Nach dem Extrusionsverfahren wurde aus einer Breitschlitzdüse bei einer Extrusionstemperatur von 245 °C eine einschichtige Folie extrudiert. Die Folie hatte die folgende Zusammensetzung:

| | |
|---|---|
| ca. 50 Gew.% | Propylenhomopolymerisat (PP) mit einem n-heptanlöslichen Anteil von 4,5 Gew.% (bezogen auf 100 % PP) und einem Schmelzpunkt von 165 °C; und einem Schmelzflußindex von 3,2 g/10 min bei 230 °C und 2,16 kg Belastung (DIN 53 735) und |
| ca. 49 Gew.-% | Propylen-Ethylen-Blockcopolymerisat mit einem Ethylenanteil von ca. 5 Gew.-% bezogen auf das Blockcopolymer und einem MFI (230°C und 2,16 kg) von 6 g/10min |
| 0,1 Gew.% | Ca- Pimelat als ß-Nukleierungsmittel |

Die Folie enthielt zusätzlich Stabilisator und Neutralisationsmittel in üblichen Mengen.

Die aufgeschmolzene Polymermischung wurde nach der Extrusion über eine erste Abzugswalze und ein weiteres Walzentrio abgezogen und verfestigt, anschließend längsgestreckt, quergestreckt und fixiert, wobei im einzelnen die folgenden Bedingungen gewählt wurden:

| | |
|---|---|
| Extrusion: | Extrusionstemperatur 245 °C |
| Abkühlwalze: | Temperatur 125°C, Verweilzeit auf der Abzugswalze 55 sec. |
| Längsstreckung: | Streckwalze T = 90 °C |
| Längsstreckung um den | Faktor 4 |
| Querstreckung: | Aufheizfelder T = 145 °C |
| Streckfelder | T = 145 °C |
| Querstreckung um den | Faktor 4 |

Die so hergestellte poröse Folie war ca. 80 µm dick und wies eine Dichte von 0,35 g/cm³ auf und zeigte ein gleichmäßiges weiß-opakes Aussehen. Die Porosität betrug 56% und der Gurley-Wert 1040 s.

### Beispiel 2

Es wurde eine Folie wie in Beispiel 1 beschrieben hergestellt. Im Unterschied zu Beispiel 1 wurden jetzt als ß-Nukleierungsmittel 0,3 Gew.% bezogen auf das Gewicht der Schicht eines Dicarboxamids eingesetzt. Die so hergestellte poröse Folie war ca. 70 µm dick und wies eine Dichte von 0,40 g/cm³ auf und zeigte ein gleichmäßiges weiß-opakes Aussehen. Die Porosität betrug 51% und der Gurley-Wert 1200 s.

### Vergleichsbeispiel

Es wurde durch Coextrusion und durch anschliessende stufenweise Orientierung in Längs- und in Querrichtung eine opake dreischichtige Folie mit einem Schichtaufbau ABC mit einer Gesamtdicke von 80 µm hergestellt. Die Deckschichten hatten eine Dicke von jeweils 0,6µm.

### Basisschicht B (= vakuolenhaltige Schicht):

| | |
|---|---|
| 93 Gew.% | Propylenhomopolymer mit einem Schmelzpunkt von 165°C |
| 7,0 Gew.% | CaCO3 vom Typ Millicarb mit einem mittleren Durchmesser von 3µm |

### Deckschicht A.

| | |
|---|---|
| 99,67 Gew.-% | statistisches Ethylen-Propylen-Copolymeres mit einem C2-Gehalt von 3,5 Gew.-% |
| 0,33 Gew.% | SiO2 als Antiblockmittel mit einer mittleren Durchmesser von 2 µm |
| Deckschicht B | wie Deckschicht A |

Die Herstellungsbedingungen in den einzelnen Verfahrensschritten waren:

| | |
|---|---|
| Extrusion Temperaturen | 280°C |
| Temperatur der Abzugswalze: | 30 °C |
| Längsstreckung: Temperatur: | 122 °C |
| Längsstreckverhältnis: | 6,0 |
| Querstreckung: Temperatur: | 155 °C |
| Querstreckverhältnis: | 8,0 |
| Fixierung: Temperatur: | 140 °C |
| Konvergenz: | 15 % |

Auf diese Weise wurde eine opake vakuolenhaltige Folie erhalten mit einer Dichte von 0,6 g/cm3. Die Folie war nicht porös, ein Gurley Wert ließ sich daher an dieser Folie nicht bestimmen.

### Erfindungsgemäße Verwendung

Die Folien nach den Beispielen und Vergleichsbeispielen wurden auf Etikettenform zugeschnitten, wie üblich an der Blasformmaschine bereitgestellt und vor dem Blasformprozeß in die Form eingelegt. Eine Blasformmaschine wurde mit einem Werkzeug für eine bauchige Flasche bestückt. Die Blasformmachine wurde mit HD-PE Blasformware mit einem MFI von 0,4 g/10min beschickt. Das HDPE wurde bei einer Masse Temperatur von ca. 200°C durch eine Ringdüse schlauchförmig extrudiert wurde. Die Form wurde geschlossen und dabei das untere Ende des Schmelzeschlauches versiegelt. In das obere Ende des Schlauches wurde eine Lanze eingefahren und der Schlauch mit einem Druck von 10 bar in der Form aufgeblasen. Anschließend wurde die Form auseinander gefahren und der Behälter entnommen.

Die porösen Etikettenfolien nach den Beispielen 1 und 2 waren mit dem Behälter fest verbunden und zeigten sämtlich ein einwandfrei glattes Aussehen, ohne irgendwelche Anzeichen von Orangenhaut. Die opake vakuolenhaltige Folie nach dem Vergleichsbeispiel war ebenfalls mit dem Behälter verbunden und zeigte das charakteristische Erscheinungsbild der Orangenhaut.

## Patentansprüche

1. Verwendung einer biaxial orientierten porösen Folie, die ein Propylenpolymeres und mindestens ein ß-Nukleierungsmittel enthält und deren Porosität durch Umwandlung von ß-kristallinem Polypropylen beim Verstrecken der Folie erzeugt wird, zur Etikettierung von Behältnissen beim Blasformen, **dadurch gekennzeichnet, daß** die Folie eine Dichte von < 0,5g/cm³ hat.

2. Verwendung nach Anspruch 1, **dadurch gekennzeichnet, daß** die Porosität der. Folie in einem Bereich von 500 bis 1300 Gurley liegt.

3. Verwendung nach Anspruch 2 **dadurch gekennzeichnet, daß** die Folie ein Propylenhomopolymeres und/oder ein Propylenblockcopolymeres enthält.

4. Verwendung nach Anspruch 1, **dadurch gekennzeichnet, daß** die Folie eine Mischung aus Propylenhomopolymer und Propylenblockcopolymer enthält und das Verhältnis in einem Bereich von 90:10 bis 10:90 liegt.

5. Verwendung nach einem oder mehreren der Ansprüche 1 bis 4, **dadurch gekennzeichnet, daß** die Folie 0,001Gew% bis 5 Gew%.- bezogen auf das Gewicht derß- nukleierten Schicht ß-Nukleierungsmittel enthält.

6. Verwendung nach einem oder mehreren der Ansprüche 1 bis 5, **dadurch gekennzeichnet, daß** das Nukleiierungsmittel ein Calciumsalz der Pimelinsäure oder der Suberinsäure oder ein Carboxamid ist.

7. Verwendung nach einem oder mehreren der Ansprüche 1 bis 6, **dadurch gekennzeichnet, daß** die Folie nach dem Stenterverfahren hergestellt ist und die Abzugswalzentemperatur in einem Bereich von 60 bis 130 °C liegt.

8. Verfahren zur Herstellung eines etikettierten Behälters mittels Blasformverfahren, bei dem man ein thermoplastisches Polymer durch eine Ringdüse als Schmelzeschlauch in eine zweiteilige Form extrudiert, in welche eine Folie oder mindestens ein Folienabschnitt einlegt ist, und durch Schießen der zweiteiligen Form den Schmelzeschlauch an einem Ende abquetscht und am gegenüberliegenden Ende derart Luft einführt, daß der Schmelzeschlauch aufgeblasen wird und sich derart an die Form anpaßt, daß dabei ein Hohlkörper geformt und gleichzeitig das eingelegte Etikett appliziert wird, **dadurch gekennzeichnet, daß** das Etikett aus einer biaxial orientierten Folie besteht, die ein poröse Struktur aufweist, welche bei der Herstellung der Folie durch Umwandlung von ß-kristallinem Polypropylen in alpha-kristallines Polypropylen beim Verstrecken erzeugt wurden, wobei die poröse Folie eine Dichte von < 0,5 g/cm³ hat.

## Claims

1. Use of a biaxially oriented porous film which comprises a propylene polymer and at least one β-nucleating agent and whose porosity is generated by conversion of β-crystalline polypropylene during stretching of the film, for the labelling of containers during blow moulding, **characterized in that** the film has a density of < 0.5 g/cm³.

2. Use according to Claim 1, **characterized in that** the porosity of the film is in the range from 500 to 1300 Gurley.

3. Use according to Claim 2, **characterized in that** the film comprises a propylene homopolymer and/or a propylene block copolymer.

4. Use according to Claim 1, **characterized in that** the film comprises a mixture of propylene homopolymer and propylene block copolymer and the ratio is in the range from 90:10 to 10:90.

5. Use according to one or more of Claims 1 to 4, **characterized in that** the film comprises from 0.001% by weight to 5% by weight of β-nucleating agent based on the weight of the β-nucleated layer.

6. Use according to one or more of Claims 1 to 5, **characterized in that** the nucleating agent is a calcium salt of pimelic acid or of suberic acid or is a carboxamide.

7. Use according to one or more of Claims 1 to 6, **characterized in that** the film is produced by the stenter process, and the take-off roll temperature is in the range from 60 to 130 °C.

8. Process for the production of a labelled container by means of the blow-moulding process, in which a thermoplastic polymer is extruded as melt tube through an annular die into a two-part mould, in which a film or at least one film section has been laid, and the melt tube is squeezed at one end by closing the two-part mould and air is introduced at the opposite end in such a way that the melt tube is inflated and adapts itself to the mould in such a way that a hollow body is shaped, and at the same time the laid-in label is applied, **characterized in that** the label consists of a biaxially oriented film which has a porous structure produced during production of the film by conversion of β-crystalline polypropylene into alpha-crystalline polypropylene during the stretching, wherein the porous film has a density of < 0.5 g/m³.

## Revendications

1. Utilisation d'une feuille poreuse biaxialement orientée laquelle contient un polymère de propylène et au moins un agent de nucléation β et dont la porosité est générée par la conversion de polypropylène β-cristallin se produisant lors de l'orientation de ladite feuille, pour l'étiquetage de récipients lors de leur moulage par soufflage, **caractérisée en ce que** la feuille présente une densité de < 0,5 g/cm³.

2. Utilisation selon la revendication 1, **caractérisée en ce que** la porosité de ladite feuille est comprise entre 500 à 1300 Gurley.

3. Utilisation selon la revendication 2, **caractérisée en ce que** ladite feuille contient un homopolymère de propylène et/ou un copolymère à blocs de propylène.

4. Utilisation selon la revendication 1, **caractérisée en ce que** ladite feuille contient un mélange d'homopolymère de propylène et de copolymère à blocs de propylène, leur rapport étant compris entre 90 : 10 et 10 : 90.

5. Utilisation selon une ou plusieurs des revendications 1 à 4, **caractérisée en ce que** la feuille contient de 0,001 % en poids à 5 % en poids d'agent de nucléation β, par rapport au poids de la couche ayant subi une nucléation β.

6. Utilisation selon l'une des revendications 1 à 5, **caractérisée en ce que** ledit agent de nucléation est un sel de calcium de l'acide pimélique ou de l'acide subérique ou bien un amide d'acide carboxylique.

7. Utilisation selon une ou plusieurs des revendications 1 à 6, **caractérisée en ce que** ladite feuille est fabriquée selon le procédé à rame et la température des cylindres d'appel est comprise entre 60 et 130 °C.

8. Procédé de fabrication d'un récipient étiqueté au moyen d'un procédé de moulage par soufflage, consistant à extruder un polymère thermoplastique à travers une filière annulaire de manière à ce qu'il soit introduit, sous forme d'un tuyau en matière fondue, dans un moule à deux pièces dans lequel une feuille ou au moins une partie de feuille a été déposée, et à écraser le tuyau en matière fondue sur l'une de ses extrémités en fermant le moule à deux pièces puis à introduire de l'air par l'autre extrémité pour ainsi gonfler le tuyau en matière fondue lequel vient alors épouser le moule de manière à former un corps creux et appliquer en même temps l'étiquette déposée, **caractérisé en ce que** ladite étiquette est constituée d'une feuille biaxialement orientée présentant une structure poreuse laquelle a été générée par la conversion de polypropylène β-cristallin en polypropylène alpha-cristallin se produisant lors de l'orientation, ladite feuille poreuse présentant une densité de < 0,5 g/cm³.
